# EUROPÄISCHE PATENTSCHRIFT

(11) **EP 3 658 405 B1**
(45) Veröffentlichungstag und Bekanntmachung des Hinweises auf die Patenterteilung: **08.09.2021**
(21) Anmeldenummer: 18745584.5
(22) Anmeldetag: 24.07.2018
(51) Int. Cl.: H02J 7/00, H01M 10/48, H01M 10/42, B60L 1/02, B60L 3/12, B60L 50/64, B60L 58/10, B60L 58/26, B60L 58/27

(54) **ÜBERTRAGUNGSVORRICHTUNG, DATENERFASSUNGSVORRICHTUNG, SYSTEM AUS TEMPERIERVORRICHTUNG UND DATENERFASSUNGSVORRICHTUNG, BATTERIESYSTEM SOWIE VERFAHREN ZUM ÜBERMITTELN VON ZUSTANDSDATEN**
TRANSMISSION DEVICE, DATA ACQUISITION DEVICE, SYSTEM CONSISTING OF A TEMPERATURE-CONTROLLING DEVICE AND A DATA ACQUISITION DEVICE, BATTERY SYSTEM AND METHOD FOR COMMUNICATING STATE DATA
DISPOSITIF DE TRANSMISSION, DISPOSITIF D'ACQUISITION DE DONNÉES, SYSTÈME COMPOSÉ D'UN DISPOSITIF DE RÉGULATION THERMIQUE ET D'N DISPOSITIF D'ACQUISITION DE DONNÉES, SYSTÈME DE BATTERIES AINSI QUE PROCÉDÉ POUR LA TRANSMISSION DE DONNÉES SUPPLÉMENTAIRES

(30) Priorität: 27.07.2017 DE 102017116983
(43) Veröffentlichungstag der Anmeldung: 03.06.2020
(73) Patentinhaber: Lion Smart GmbH, 85748 Garching (DE)
(72) Erfinder: OSTERMEIER, Daniel, 80796 München (DE); BEHLEN, Christian, 83135 Schechen (DE); MAYER, Tobias, 80805 München (DE); QUINGER, Daniel, 82211 Herrsching (DE); ZETTEL, Michael, 85354 Freising (DE)
(74) Vertreter: Patentanwälte Bals & Vogel
(86) Internationale Anmeldenummer: PCT/EP2018/069978
(87) Internationale Veröffentlichungsnummer: WO 2019/020596

(56) Entgegenhaltungen:
- US-A1- 2013 052 490
- US-A1- 2014 046 524
- US-A1- 2017 125 860

## Beschreibung

Die vorliegende Erfindung betrifft eine Übertragungsvorrichtung zum Übertragen von Zustandsdaten für ein Batteriesystem mit zumindest einer Batteriezelle und einer Temperiervorrichtung zum Temperieren der zumindest einen Batteriezelle mit einem zumindest abschnittsweise in einer Temperierfluidleitung geleiteten Temperierfluid, die Übertragungsvorrichtung aufweisend eine Sensorschnittstelle zur datenkommunizierenden Verbindung mit einer Sensorvorrichtung zur Ermittlung von Zustandsdaten der zumindest einen Batteriezelle und eine Kontrollschnittstelle zur datenkommunizierenden Verbindung in einer Kontrollvorrichtung zur Verarbeitung der Zustandsdaten. Ferner betrifft die Erfindung eine Datenerfassungsvorrichtung zur Erfassung von Zustandsdaten eines Batteriesystems, das Batteriesystem aufweisend zumindest eine Batteriezelle und eine Temperiervorrichtung zum Temperieren der zumindest einen Batteriezelle mit einem zumindest abschnittsweise in einer Temperierfluidleitung geleiteten Temperierfluid, die Datenerfassungsvorrichtung aufweisend eine Sensorvorrichtung mit zumindest einer Sensoreinheit zur Ermittlung der Zustandsdaten der zumindest einen Batteriezelle, eine Kontrollvorrichtung zur Verarbeitung der Zustandsdaten und eine Übertragungsvorrichtung zum Übertragen der Zustandsdaten. Darüber hinaus betrifft die Erfindung ein System aus einer Temperiervorrichtung und einer Datenerfassungsvorrichtung für ein Batteriesystem, das Batteriesystem aufweisend zumindest eine Batteriezelle, die Temperiervorrichtung aufweisend ein zumindest abschnittsweise in einer Temperierfluidleitung geleitetes Temperierfluid zum Temperieren der zumindest einen Batteriezelle, die Datenerfassungsvorrichtung aufweisend eine Sensorvorrichtung zur Ermittlung von Zustandsdaten der zumindest einen Batteriezelle, eine Kontrollvorrichtung zur Verarbeitung der Zustandsdaten und eine Übertragungsvorrichtung zum Übertragen der Zustandsdaten. In weiteren Aspekten betrifft die Erfindung ein Batteriesystem, aufweisend zumindest eine Batteriezelle und ein System aus einer Temperiervorrichtung und einer Datenerfassungsvorrichtung für ein Batteriesystem, sowie ein Verfahren zum Übertragen von Zustandsdaten einer Batteriezelle in einem Batteriesystem.

Batteriesysteme als elektrische Energiespeicher werden in der modernen Technik weitläufig eingesetzt, beispielsweise in Elektrofahrzeugen. Mögliche Ausgestaltungsformen derartiger Energiespeicher sind beispielsweise Lithium-Ionen-Batterien. Um eine Leistungsfähigkeit derartiger Batteriesysteme zu steigern, ist es zum Beispiel ferner bekannt, mehrere einzelne Batteriezellen in einer Batterieebene elektrisch parallel zu verschalten, darüber hinaus mehrere derartige Batterieebenen elektrisch seriell ebenfalls zu verschalten. Um eine Betriebssicherheit derartiger Batteriesysteme sicherzustellen, ist es bekannt, Zustandsdaten der einzelnen Batteriezellen durch Sensorvorrichtungen zu erfassen und in, zumeist zentral vorhandenen, Kontrollvorrichtungen zu sammeln und in diesen auszuwerten. Eine genaue Information sowohl über den Gesamtzustand des Batteriesystems als auch über den Zustand der einzelnen Batteriezellen kann auf diese Weise bereitgestellt werden.

Um die durch die Sensorvorrichtungen an den Batteriezellen ermittelten Zustandsdaten in der Kontrollvorrichtung auswerten zu können, müssen diese Zustandsdaten von den Sensorvorrichtungen zur Kontrollvorrichtung übertragen werden. Für diese Übertragung von Zustandsdaten werden zumeist kabelgebundene Übertragungsvorrichtungen eingesetzt. Dafür werden die Kontrollvorrichtung und die Sensorvorrichtung über Kabel und/oder Leitungen miteinander verbunden, wobei über diese Kabel bzw. Leitungen ein Austausch von Daten zwischen der Sensorvorrichtung und der Kontrollvorrichtung vorgenommen werden kann. Bevorzugt wird diese Datenübertragung über elektrische Impulse durch die Kabel bzw. Leitungen durchgeführt.

Die Verwendung von Kabeln bzw. Leitungen als Übertragungsvorrichtungen führen zu mehreren Nachteilen. So benötigen beispielsweise die Kabel bzw. Leitungen dieser Übertragungsvorrichtungen eigenen Bauraum, wodurch insgesamt ein derartig ausgebildetes Batteriesystem weniger kompakt aufgebaut ist und/oder bei der Planung und Konstruktion des Batteriesystems Randbedingungen zu berücksichtigen sind, die beispielsweise eine optimale Auslegung des Batteriesystems verhindern oder zumindest erschweren. Ferner können durch diese kabelgebundene Übertragung von Zustandsdaten elektromagnetische Verunreinigungen zum einen erzeugt werden, wodurch ein Betrieb des Batteriesystems beeinträchtigt werden kann. Andererseits können auch elektromagnetische Verunreinigungen des Batteriesystems selbst in die Kabel bzw. Leitungen eingekoppelt werden, wodurch die Übertragung von Zustandsdaten selbst gestört werden kann. Auch die zur Verbindung der Kabel und/oder Leitungen nötigen Stecker beziehungsweise Steckerverbindungen können sich nachteilig auf eine Signalqualität und insbesondere auf eine Zuverlässigkeit einer Übertragungsvorrichtung gemäß dem Stand der Technik auswirken. Diese negativen Auswirkungen sind zumeist umso schwerwiegender, je mehr derartige Stecker beziehungsweise Steckerverbindungen eingesetzt sind

Die US2017/125860A1 zeigt ein fluidgekühltes Batteriesystem.

Es ist daher Aufgabe der vorliegenden Erfindung, die voranstehend beschriebenen Nachteile zumindest teilweise zu beheben. Insbesondere ist Aufgabe der vorliegenden Erfindung, in kostengünstiger und einfacher Weise eine Übertragungsvorrichtung, eine Datenerfassungsvorrichtung, ein System aus einer Temperiervorrichtung und einer Datenerfassungsvorrichtung, ein Batteriesystem sowie ein Verfahren zum Übertragen von Zustandsdaten bereitzustellen, durch die eine Übertragung von Zustandsdaten innerhalb eines Batteriesystems vereinfacht werden kann, wobei insbesondere eine zusätzliche Verkabelung vermieden werden kann und die Übertragung der Zustandsdaten ohne oder nur mit geringer elektromagnetischer Störung durchgeführt werden kann.

Voranstehende Aufgabe wird gelöst durch eine Übertragungsvorrichtung zum Übertragen von Zustandsdaten mit den Merkmalen des Anspruchs 1, durch eine Datenerfassungsvorrichtung mit den Merkmalen des Anspruchs 6, durch ein System aus einer Temperiervorrichtung und einer Datenerfassungsvorrichtung mit den Merkmalen des Anspruchs 12, durch ein Batteriesystem mit den Merkmalen des Anspruchs 15 sowie durch ein Verfahren zum Übertragen von Zustandsdaten einer Batteriezelle mit den Merkmalen des Anspruchs 16. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Übertragungsvorrichtung beschrieben sind, selbstverständlich auch im Zusammenhang mit der erfindungsgemäßen Datenerfassungsvorrichtung, mit dem erfindungsgemäßen System aus einer Temperiervorrichtung und einer Datenerfassungsvorrichtung, mit einem erfindungsgemäßen Batteriesystem sowie mit einem erfindungsgemäßen Verfahren zum Übertragen von Zustandsdaten einer Batteriezelle und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine Übertragungsvorrichtung zum Übertragen von Zustandsdaten für ein Batteriesystem mit zumindest einer Batteriezelle und einer Temperiervorrichtung zum Temperieren der zumindest einen Batteriezelle mit einem zumindest abschnittsweise in einer Temperierfluidleitung geleiteten Temperierfluid, die Übertragungsvorrichtung aufweisend eine Sensorschnittstelle zur datenkommunizierenden Verbindung mit einer Sensorvorrichtung zur Ermittlung von Zustandsdaten der zumindest einen Batteriezelle und eine Kontrollschnittstelle zur datenkommunizierenden Verbindung mit einer Kontrollvorrichtung zur Verarbeitung der Zustandsdaten. Eine erfindungsgemäße Übertragungsvorrichtung ist dadurch gekennzeichnet, dass die Sensorschnittstelle eine erste Kommunikationseinheit zum Aussenden von Lichtsignalen in das Temperierfluid und einen ersten Anordnungsabschnitt zum Anordnen der ersten Kommunikationseinheit in der Temperierfluidleitung aufweist und die Kontrollschnittstelle eine zweite Kommunikationseinheit zum Empfangen von Lichtsignalen aus dem Temperierfluid und einen zweiten Anordnungsabschnitt zum Anordnen der zweiten Kommunikationseinheit in der Temperierfluidleitung aufweist, wobei im angeordneten Zustand zum Übertragen der Zustandsdaten Lichtsignale durch die erste Kommunikationseinheit der Sensorschnittstelle in das Temperierfluid aussendbar und durch die zweite Kommunikationseinheit der Kontrollschnittstelle aus dem Temperierfluid empfangbar sind.

Eine erfindungsgemäße Übertragungsvorrichtung ist für einen Einsatz in einem Batteriesystem vorgesehen. Ein Batteriesystem, das insbesondere in einem Fahrzeug eingesetzt werden kann, weist zumindest eine Batteriezelle auf, wobei ein derartiges Batteriesystem üblicherweise mehrere, oftmals in einer Batterieebene parallel verschaltete, Batteriezellen aufweist. Auch kann bei Batteriesystemen vorgesehen sein, dass wiederum mehrere derartige Batterieebenen seriell elektrisch verschaltet sind, um eine Leistungsfähigkeit des Batteriesystems weiter zu steigern. Das Batteriesystem weist ferner eine Temperiervorrichtung auf, durch welche die zumindest eine Batteriezelle temperiert werden kann. Unter Temperieren im Sinne der Erfindung ist insbesondere ein kontrolliertes Verändern einer Temperatur der Batteriezelle durch die Temperiervorrichtung zu verstehen, sowohl ein Erwärmen als auch ein Abkühlen. Ein Unterkühlen als auch ein Überhitzen der Batteriezelle und dadurch des gesamten Batteriesystems kann dadurch vermieden werden. Die Temperiervorrichtung weist darüber hinaus insbesondere eine Temperierfluidleitung auf, in der ein Temperierfluid geleitet ist. Das Temperierfluid kann beispielsweise als Gas, als Flüssigkeit und/oder in einem Mischzustand vorliegen. Bevorzugt wird das Temperierfluid in der Temperiervorrichtung umgewälzt und strömt somit in der Temperierfluidleitung, wodurch auf diese Weise ein Abtransport von thermischer Energie von der Batteriezelle erfolgt. Ferner ist an oder zumindest in der Nähe der Batteriezelle eine Sensorvorrichtung vorgesehen, durch die Zustandsdaten, zum Beispiel eine Temperatur, eine elektrische Spannung, ein elektrischer Strom oder ähnliches, der Batteriezelle ermittelt werden können. Eine, oftmals zentral vorhandene, Kontrollvorrichtung ist für ein Auswerten bzw. Verarbeiten dieser Zustandsdaten vorgesehen. Ein derartiges Verarbeiten kann beispielsweise ein reines Erfassen der Zustandsdaten, aber auch zum Beispiel ein Vergleichen der Zustandsdaten mit Sollwerten und gegebenenfalls eine Ausführung von entsprechenden Regelvorgängen für das Batteriesystem sein.

Wie oben beschrieben, ist bevorzugt die Sensorvorrichtung in der Nähe der Batteriezelle, die Kontrollvorrichtung hingegen zumeist zentral im Batteriesystem vorhanden. Mit anderen Worten sind somit die Kontrollvorrichtung und die Sensorvorrichtungen im Batteriesystem oftmals voneinander beabstandet angeordnet. Durch eine erfindungsgemäße Übertragungsvorrichtung kann diese Entfernung der Sensorvorrichtung von der Kontrollvorrichtung überbrückt und insbesondere die von der Sensorvorrichtung ermittelten Zustandsdaten von der Sensorvorrichtung für eine Verarbeitung in der Kontrollvorrichtung zur Kontrollvorrichtung übertragen werden. Für diesen Zweck weist die Übertragungsvorrichtung eine Sensorschnittstelle auf, die vorzugsweise wie die Sensorvorrichtung ebenfalls im Bereich und/oder an der Batteriezelle angeordnet ist. Die Sensorschnittstelle ist datenkommunizierend mit der Sensorvorrichtung verbindbar, wodurch mit anderen Worten die Zustandsdaten von der Sensorvorrichtung an die Sensorschnittstelle übertragen werden können. Analog ist die Kontrollschnittstelle der Übertragungsvorrichtung vorzugsweise in der Nähe der Kontrollvorrichtung des Batteriesystems angeordnet, beispielsweise ebenfalls an einer zentralen Position innerhalb des Batteriesystems. Auch hier ist eine datenkommunizierende Verbindung zwischen der Kontrollschnittstelle und der Kontrollvorrichtung herstellbar, so dass Zustandsdaten, die in der Kontrollschnittstelle vorhanden sind, an die Kontrollvorrichtung übertragen werden können. Besonders bevorzugt sind die Sensorschnittstelle der Übertragungsvorrichtung und die Kontrollschnittstelle der Übertragungsvorrichtung voneinander beabstandet im Batteriesystem angeordnet, um die oben beschriebene Anordnungsorte in der Nähe der Sensorvorrichtung bzw. der Kontrollvorrichtung bereitstellen zu können.

Erfindungsgemäß ist vorgesehen, dass die Sensorschnittstelle eine erste Kommunikationseinheit zum Aussenden von Lichtsignalen in das Temperierfluid aufweist. Ferner weist die Kontrollschnittstelle eine zweite Kommunikationseinheit auf, die zum Empfangen von Lichtsignalen aus dem Temperierfluid ausgebildet ist. Auf diese Weise kann bereitgestellt werden, dass, obwohl die Sensorschnittstelle und die Kommunikationsschnittstelle voneinander beabstandet sind, dennoch Zustandsdaten zwischen diesen beiden Schnittstellen übertragen werden können. Für diesen Zweck weisen beide Schnittstellen jeweils Anordnungsabschnitte auf, durch die die erste Kommunikationseinheit der Sensorschnittstelle und die zweite Kommunikationseinheit der Kontrollschnittstelle in der Temperierfluidleitung anordenbar sind. Mit anderen Worten befinden sich im angeordneten Zustand zumindest die Kommunikationseinheiten der Sensorschnittstelle und der Kommunikationsschnittstelle wenigstens abschnittsweise im Inneren der Temperierfluidleitung und sind im Betrieb des Batteriesystems von Temperierfluid umgeben. Zum Übertragen von Zustandsdaten können dadurch im angeordneten Zustand von der ersten Kommunikationseinheit der Sensorschnittstelle Lichtsignale in das Temperierfluid ausgesandt werden. Das Temperierfluid kann bevorzugt transparent oder zumindest teilweise transparent für die Lichtsignale ausgebildet sein. Die Lichtsignale werden in der Temperierfluidleitung, insbesondere im Temperierfluid, weitergeleitet und schließlich aus dem Temperierfluid von der zweiten Kommunikationseinheit der Kontrollschnittstelle wieder empfangen. Mit anderen Worten wird die Temperierfluidleitung, insbesondere das Temperierfluid selbst, zum Weiterleiten der Lichtsignale zwischen der ersten Kommunikationseinheit der Sensorschnittstelle und der zweiten Kommunikationseinheit der Kontrollschnittstelle verwendet. Die Lichtsignale können insbesondere auf direktem Weg, also ein Weg, der ausschließlich im Temperierfluid verläuft und zumeist gerade ausgebildet ist, von einer Kommunikationseinheit zur anderen gelangen, oder alternativ oder zusätzlich über einen indirekten Weg, der im Gegensatz zum direkten Weg eine oder mehrere Reflexionen der Lichtsignale an den Innenwänden der Temperierleitung aufweist.

Eine Übertragung der Zustandsdaten erfolgt mit anderen Worten derart, dass die Zustandsdaten von der Sensorvorrichtung an der Batteriezelle ermittelt werden, anschließend an die Sensorschnittstelle datenkommunizierend übertragen werden, von der ersten Kommunikationseinheit der Sensorschnittstelle als Lichtsignale in das Temperierfluid eingespeist, durch das Temperierfluid weitergeleitet und von der zweiten Kommunikationseinheit der Kontrollschnittstelle aus dem Temperierfluid wieder detektiert werden. Anschließend werden die von der zweiten Kommunikationseinheit der Kontrollschnittstelle empfangenen Zustandsdaten über die datenkommunizierende Verbindung der Kontrollschnittstelle mit der Kontrollvorrichtung an die Kontrollvorrichtung übertragen und dort verarbeitet.

Durch die Verwendung der Temperierleitung beziehungsweise des Temperierfluids als Träger der Lichtsignale kann insbesondere auf ein Vorhandensein von zuständigen Leitungen und/oder Kabeln für die Übertragung der Zustandsdaten verzichtet werden. Ein Bauraum, der sonst für diese Kabel bzw. Leitungen verwendet werden würde, kann auf diese Weise eingespart werden. Eine insgesamt kompaktere Ausgestaltung eines Batteriesystems mit einer derartigen Übertragungsvorrichtung kann somit ermöglicht werden. Ferner kann durch die Übertragung von Zustandsdaten durch Lichtsignale im Temperierfluid eine Erzeugung von elektromagnetischen Störungen bzw. eine Beeinträchtigung der Datenübertragung durch externe elektromagnetische Störsignale und/oder Verunreinigungen vermieden werden. Insgesamt kann somit durch eine erfindungsgemäße Übertragungsvorrichtung eine Übertragung von Zustandsdaten einer Batteriezelle innerhalb eines Batteriesystems verbessert werden.

Eine erfindungsgemäße Übertragungsvorrichtung kann bevorzugt dadurch weiterentwickelt sein, dass die Lichtsignale phasensynchron oder zumindest im Wesentlichen phasensynchron sowie monochromatisch oder zumindest im Wesentlichen monochromatisch sind, insbesondere dass die Lichtsignale aus phasensynchronen und monochromatischen Laserlicht gebildet sind. Durch den Einsatz eines phasensynchronen und monochromatischen Lichtsignals, insbesondere eines Lichtsignals aus Laserlicht, kann eine Signalqualität des Lichtsignals deutlich gesteigert werden. Fehlerhafte Übertragungen von Zustandsdaten aufgrund einer zu geringen Signalqualität des Lichtsignals können dadurch vermieden oder zumindest deutlich eingeschränkt werden. Phasensynchrones Licht zeichnet sich dadurch aus, dass die einzelnen Lichtwellen einer Lichtquelle, also einer Kommunikationseinheit, zueinander in eine festen Phasenbeziehung stehen, mit anderen Worten eine hohe Kohärenz aufweisen und somit keinen oder nur eine geringen Laufzeitbeziehungsweise Weglängenunterschied aufweisen. Monochromatisches Licht weist nur eine einzige Wellenlänge oder zumindest nur ein sehr eng begrenztes Wellenlängenspektrum auf. Durch Laserlicht können diese Eigenschaften besonders einfach bereitgestellt werden. Wellenlängen des verwendeten Laserlichts können in einer erfindungsgemäßen Übertragungsvorrichtung bevorzugt im Infrarot, UV-Bereich oder im sichtbaren Licht liegen.

Besonders bevorzugt kann bei einer erfindungsgemäßen Übertragungsvorrichtung vorgesehen sein, dass zur Bereitstellung einer bidirektionalen Übertragung die erste Kommunikationseinheit zum Empfangen von Lichtsignalen aus dem Temperierfluid und die zweite Kommunikationseinheit zum Senden von Lichtsignalen in das Temperierfluid ausgebildet sind. Bidirektional im Sinne der Erfindung bedeutet insbesondere, dass eine Datenübertragung sowohl von der Sensorschnittstelle zur Kontrollschnittstelle als auch von der Kontrollschnittstelle zur Sensorschnittstelle erfolgen kann. Beispielsweise ist auf diese Weise auch eine Ansteuerung der Sensorvorrichtung durch die Kontrollvorrichtung bereitstellbar. Durch die Ermöglichung einer derartigen bidirektionalen Übertragung kann ferner vermieden werden, dass für eine datenkommunizierende Verbindung von der Kontrollvorrichtung zur Sensorvorrichtung eine zusätzliche Übertragungsvorrichtung eingesetzt werden muss. Dies ermöglicht eine weitere Steigerung eines kompakten Aufbaus eines Batteriesystems mit einer erfindungsgemäßen Übertragungsvorrichtung.

Auch kann eine erfindungsgemäße Übertragungsvorrichtung dahin gehend ausgebildet sein, dass die Übertragungsvorrichtung eine Zwischenverstärkereinheit mit zumindest einer dritten Kommunikationseinheit zum Aussenden und Empfangen von Lichtsignalen in das bzw. aus dem Temperierfluid und einen dritten Anordnungsabschnitt zum Anordnen der dritten Kommunikationseinheit in der Temperierfluidleitung aufweist, wobei im angeordneten Zustand durch die zumindest eine dritte Kommunikationseinheit der Zwischenverstärkereinheit Lichtsignale der ersten Kommunikationseinheit und/oder der zweiten Kommunikationseinheit aus der Temperierfluidleitung beziehungsweise dem Temperierfluid empfangbar und an die zweite Kommunikationseinheit und/oder erste Kommunikationseinheit in die Temperierfluidleitung beziehungsweise das Temperierfluid aussendbar sind. Bei einer Übertragung von Zustandsdaten als Lichtsignale in der Temperierleitung beziehungsweise im Temperierfluid der Temperiervorrichtung des Batteriesystems kann es zu einer Dämpfung der Lichtsignale kommen. Dies kann zu einer Verringerung der Signalstärke führen, die umso ausgeprägter werden kann, je weiter man sich von der aussendenden Kommunikationseinheit der jeweiligen Schnittstelle entfernt. Durch das Vorhandensein einer Zwischenverstärkereinheit kann diese Problematik gelöst oder zumindest deutlich vermindert werden. So weist die Zwischenverstärkereinheit zumindest eine dritte Kommunikationseinheit auf, die sowohl zum Aussenden als auch zum Empfangen von Lichtsignalen in das bzw. aus dem Temperierfluid ausgebildet ist. In der dritten Kommunikationseinheit, zusätzlich oder alternativ auch in einem anderen geeigneten Bauelement der Zwischenverstärkereinheit, kann das empfangene Lichtsignal vor dem erneuten Aussenden zur Steigerung der Signalstärke verstärkt werden. Ferner weist die Zwischenverstärkereinheit auch einen dritten Anordnungsabschnitt auf, um im Inneren der Temperierfluidleitung angeordnet werden zu können. Auf diese Weise kann bereitgestellt werden, dass die Zwischenverstärkereinheit, insbesondere die dritte Kommunikationseinheit der Zwischenverstärkereinheit, ebenfalls im Inneren der Temperierfluidleitung angeordnet ist und von Temperierfluid umgeben ist. Bevorzugt kann eine derartige Zwischenverstärkereinheit an einer Position in der Temperierleitung angeordnet sein, in der ein von der Sensorschnittstelle bzw. Kontrollschnittstelle ausgesandtes Lichtsignal noch sicher empfangbar ist. Dadurch kann durch die Zwischenverstärkereinheit dieses Signal von der jeweiligen Schnittstelle aufgefangen und wieder an die jeweils andere Schnittstelle abgegeben werden. Neben einer monodirektionalen Datenübertragung ist auch die bidirektionale Datenübertragung denkbar, so dass die Zwischenverstärkereinheit auch zum Bereitstellen der bidirektionalen Kommunikation zwischen der Kontrollschnittstelle und der Sensorschnittstelle eingesetzt werden kann. Auch ein Einsatz von mehreren, nacheinander in der Temperierleitung angeordneten Zwischenverstärkereinheiten ist möglich. In diesem Fall werden die Daten insbesondere auch von einer Zwischenverstärkereinheit zur nächsten übertragen, so dass ein Abstand zwischen der Kontrollschnittstelle und der Sensorschnittstelle weiter vergrößert werden kann. Bevorzugte Positionen einer Anordnung der Zwischenverstärkereinheit können beispielsweise an Biegungen der Temperierleitungen der Temperiervorrichtung des Batteriesystems und/oder in regelmäßigen Abständen zur Verstärkung der Lichtsignale sein. Insgesamt kann somit durch derartige Zwischenverstärkereinheiten eine Entfernung zwischen der Kontrollschnittstelle und der Sensorschnittstelle der Übertragungsvorrichtung bereitgestellt werden, die im Wesentlichen nur von der Anzahl der Zwischenverstärkereinheiten limitiert ist. Eine besonders flexible Ausgestaltung einer erfindungsgemäßen Übertragungsvorrichtung, insbesondere hinsichtlich der Anordnung der Kontrollschnittstelle und der Sensorschnittstelle, kann dadurch bereitgestellt werden.

Ferner kann besonders bevorzugt bei einer erfindungsgemäßen Übertragungsvorrichtung vorgesehen sein, dass die erste und/oder die zweite und/oder die dritte Kommunikationseinheit zum Aussenden von Lichtsignalen ein LED-Element und/oder zum Empfangen von Lichtsignalen ein Fotosensor-Element aufweisen. LED-Elemente und/oder Fotosensor-Elemente stellen bevorzugte Ausgestaltungsformen für die Kommunikationseinheiten dar, wobei, falls technisch sinnvoll und/oder möglich, auch weitere Ausgestaltungsvarianten möglich sind.

LED-Elemente und Fotosensor-Elemente sind besonders einfache Elemente, um Lichtsignale in Fluiden zu erzeugen beziehungsweise zu empfangen. LED-Elemente sind Halbleiterbausteine, die beim Anlegen einer Spannung zur Abgabe von Licht angeregt werden. Sie sind beispielsweise im Vergleich zu Glühbirnen oder Leuchtstoffelementen deutlich energiesparender und können bei niedrigen Spannungen von oftmals weniger als 10V betrieben werden. Darüber hinaus können spezielle LED-Elemente auch zum Aussenden von Laserlicht ausgebildet sein. Fotosensor-Elemente weisen zumeist einen optisch aktiven Bereich auf, der bei einem Auftreffen von Lichtsignalen anregbar ist. Eine Detektion von Lichtsignalen aus der Temperierfluidleitung beziehungsweise dem Temperierfluid kann dadurch besonders einfach bereitgestellt werden. Beide Elemente sind elektrisch und elektronisch einfach und insbesondere wartungsarm und ermöglichen auf diese Weise eine besonders lange Lebensdauer einer erfindungsgemäßen Übertragungsvorrichtung.

Gemäß einem zweiten Aspekt der Erfindung wird die Aufgabe gelöst durch eine Datenerfassungsvorrichtung zur Erfassung von Zustandsdaten eines Batteriesystems, das Batteriesystem aufweisend zumindest eine Batteriezelle und eine Temperiervorrichtung zum Temperieren der zumindest einen Batteriezelle mit einem zumindest abschnittsweise in einer Temperierfluidleitung geleiteten Temperierfluid, die Datenerfassungsvorrichtung aufweisend eine Sensorvorrichtung mit zumindest einer Sensoreinheit zur Ermittlung der Zustandsdaten der zumindest einen Batteriezelle, eine Kontrollvorrichtung zur Verarbeitung der Zustandsdaten und eine Übertragungsvorrichtung zum Übertragen der Zustandsdaten. Eine erfindungsgemäße Datenerfassungsvorrichtung ist dadurch gekennzeichnet, dass die Übertragungsvorrichtung gemäß dem ersten Aspekt der Erfindung ausgebildet ist. Sämtliche Vorteile, die ausführlich in Bezug auf eine Übertragungsvorrichtung gemäß dem ersten Aspekt der Erfindung beschrieben worden sind, können somit auch durch eine Datenerfassungsvorrichtung gemäß dem zweiten Aspekt der Erfindung bereitgestellt werden, die eine derartige Übertragungsvorrichtung gemäß dem ersten Aspekt der Erfindung aufweist.

Eine erfindungsgemäße Datenerfassungsvorrichtung kann ferner dadurch gekennzeichnet sein, dass die Kontrollvorrichtung eine Auswerteeinheit zur Verarbeitung der Zustandsdaten aufweist, wobei zumindest die Auswerteeinheit und die zweite Kommunikationseinheit auf einer gemeinsamen Platine angeordnet sind. Die Kontrollschnittstelle, insbesondere die zweite Kommunikationseinheit der Kontrollschnittstelle, ist zum datenkommunizierenden Verbinden zur Kontrolleinheit ausgebildet. Dies kann besonders einfach bereitgestellt werden, wenn die Kontrollvorrichtung und die zweite Kommunikationseinheit auf einer gemeinsamen Platine angeordnet sind. Ein besonders kompakter Aufbau einer erfindungsgemäßen Datenerfassungsvorrichtung und dadurch des gesamten Batteriesystems kann dadurch bereitgestellt werden. Die datenkommunizierende Verbindung zwischen der zweiten Kommunikationseinheit und der Kontrollvorrichtung kann in dieser Ausgestaltungsform bereits beispielsweise durch einfache Leiterbahnen auf der Platine bereitgestellt werden. Ferner kann dadurch besonders einfach ermöglicht werden, auch die Kontrollvorrichtung zumindest teilweise durch die Temperierleitung der Temperiervorrichtung zu temperieren. Dies kann insbesondere dadurch bereitgestellt werden, da die zweite Kommunikationseinheit wenigstens abschnittsweise im Inneren der Temperierleitung angeordnet ist. Dadurch ist die Platine an der Temperierleitung angeordnet und kann sich teilweise sogar ins Innere der Temperierleitung erstrecken. Durch die gleichzeitige Anordnung der Kontrollvorrichtung auf derselben Platine ist diese Kontrollvorrichtung automatisch nahe der Temperierleitung angeordnet, wodurch ein Temperieren der Kontrollvorrichtung besonders einfach bereitgestellt werden kann. Zusammenfassend bilden diese Bereitstellung einer Temperierung der Kontrollvorrichtung sowie die Möglichkeit von einer besonders einfachen datenkommunizierenden Verbindung zwischen der Kontrollvorrichtung und der zweiten Kommunikationseinheit die Vorteile dieser Ausgestaltungsform einer erfindungsgemäßen Datenerfassungsvorrichtung.

Ferner kann eine erfindungsgemäße Datenerfassungsvorrichtung dahin gehend ausgebildet sein, dass die zumindest eine Sensoreinheit zum Erfassen zumindest eines der folgenden Zustandsdaten ausgebildet ist:
- Temperatur
- Spannung
- Strom
- Leckage

Diese Liste ist nicht abgeschlossen, so dass auch weitere Zustandsdaten, soweit technisch sinnvoll und möglich, durch die zumindest eine Sensoreinheit erfasst werden können. Die Sensoreinheit ist an oder zumindest in der Nähe der Batteriezelle angeordnet, um die Zustandsdaten zu erfassen. Ein umfassendes Erkennen eines Zustands der Batteriezelle kann aus diesen Zustandsdaten durch Auswertung in der Kontrollvorrichtung vorgenommen werden.

Darüber hinaus kann eine erfindungsgemäße Datenerfassungsvorrichtung derart ausgebildet sein, dass die Sensorvorrichtung zwei oder mehr Sensoreinheiten zum Erfassen von Zustandsdaten von zwei oder mehr Batteriezellen aufweist, wobei bevorzugt jeder der zumindest zwei Batteriezellen zumindest eine Sensoreinheit zugeordnet ist. Auf diese Weise kann bereitgestellt werden, dass eine umfassende Überwachung auch von mehreren Batteriezellen des Batteriesystems bereitgestellt werden kann. Besonders bevorzugt sind Sensoreinheiten, beispielsweise jeweils zumindest eine, für jede der Batteriezellen des Batteriesystems vorgesehen. Auf diese Weise kann eine Überwachung von allen Batteriezellen des Batteriesystems, insbesondere auf einer individuellen Basis bezüglich der Batteriezellen, bereitgestellt werden. Ein Erkennen eines Zustands, insbesondere eines Fehlerzustands, des Batteriesystems kann auf diese Weise derart genau vorgenommen werden, dass insbesondere bevorzugt eine fehlerhafte Batteriezelle erkannt werden kann.

Auch kann eine erfindungsgemäße Datenerfassungsvorrichtung dahin gehend weiterentwickelt sein, dass zur Unterscheidung der Batteriezellen die Übertragungsvorrichtung für jede zugeordnete Batteriezelle zumindest eine erste Kommunikationseinheit aufweist, wobei jede der ersten Kommunikationseinheiten mit der Sensoreinheit, welche der jeweiligen Batteriezelle zugeordnet ist, über die Sensorschnittstelle datenkommunizierend verbunden ist. Auf diese Weise ist eine Unterscheidung der überwachten Batteriezellen durch ein Erkennen der jeweiligen ersten Kommunikationseinheit bereitstellbar. Bereits durch das Erkennen, durch welche erste Kommunikationseinheit das jeweilige Lichtsignal ausgesandt wurde, kann eine Zuordnung zur entsprechenden Batteriezelle besonders einfach und ohne großen Aufwand vorgenommen werden.

Alternativ oder zusätzlich kann eine erfindungsgemäße Datenerfassungsvorrichtung dahin gehend weiterentwickelt sein, dass die erste Kommunikationseinheit zum Aussenden von Lichtsignalen ausgebildet ist, die zur Unterscheidung der erfassten Batteriezellen frequenzmoduliert, pulsweitenmoduliert und/oder amplitudenmoduliert sind. Auch auf diese Weise ist eine Unterscheidung der überwachten Batteriezelle bei Verwendung bereits nur einer einzigen ersten Kommunikationseinheit bereitstellbar. Durch eine Modulation des ausgesandten Lichtsignals hinsichtlich einer verwendeten Frequenz, einer verwendeten Pulsweite und/oder einer verwendeten Amplitude kann bereits mit nur einer ersten Kommunikationseinheit eine Unterscheidung der jeweiligen Batteriezelle, von der die erfassten Zustandsdaten kommen, ermöglicht werden. Durch die Möglichkeit, nur eine einzige erste Kommunikationseinheit zu verwenden, kann insgesamt der Aufbau einer erfindungsgemäßen Datenerfassungsvorrichtung weiter vereinfacht werden.

Alternativ oder zusätzlich können die erfassten Zustandsdaten auch digitalisiert werden und erst anschließend als Lichtsignale im Temperierfluid übertragen werden. Die digitalen Signale können zur Unterscheidung der einzelnen Batteriezellen entsprechende Informationen, beispielsweise als ein Kopfabschnitt eines Datenpakets, beinhalten.

Gemäß einem dritten Aspekt der Erfindung wird die Aufgabe gelöst durch ein System aus einer Temperiervorrichtung und einer Datenerfassungsvorrichtung für ein Batteriesystem, das Batteriesystem aufweisend zumindest eine Batteriezelle, die Temperiervorrichtung aufweisend ein zumindest abschnittsweise in einer Temperierfluidleitung geleitetes Temperierfluid zum Temperieren der zumindest einen Batteriezelle, die Datenerfassungsvorrichtung aufweisend eine Sensorvorrichtung zur Ermittlung von Zustandsdaten der zumindest einen Batteriezelle, eine Kontrollvorrichtung zur Verarbeitung der Zustandsdaten und eine Übertragungsvorrichtung zum Übertragen der Zustandsdaten. Ein erfindungsgemäßes System ist dadurch gekennzeichnet, dass die Übertragungsvorrichtung gemäß dem ersten Aspekt der Erfindung und/oder die Datenerfassungsvorrichtung gemäß dem zweiten Aspekt der Erfindung ausgebildet sind. Sämtliche Vorteile, die ausführlich in Bezug auf eine Datenübertragungsvorrichtung gemäß dem ersten Aspekt der Erfindung und/oder in Bezug auf eine Datenerfassungsvorrichtung gemäß dem zweiten Aspekt der Erfindung beschrieben worden sind, können somit auch durch ein System gemäß dem dritten Aspekt der Erfindung bereitgestellt werden, das eine derartige Übertragungsvorrichtung gemäß dem ersten Aspekt der Erfindung und/oder eine derartige Datenerfassungsvorrichtung gemäß dem zweiten Aspekt der Erfindung aufweist. Ein erfindungsgemäßes System kann dahin gehend weitergebildet sein, dass zur Bereitstellung einer Totalreflexion der Lichtsignale die Temperierfluidleitung eine Innenwandung mit zumindest zwei unterschiedlichen Brechungsindizes aufweist, und/oder dass die Temperierfluidleitung eine Innenwandung aufweist, wobei die Innenwandung und das Temperierfluid zwei unterschiedliche Brechungsindizes aufweisen. Totalreflexion von Lichtsignalen kann an Grenzflächen zwischen zwei optisch unterschiedlich dichten Medien auftreten, wobei die Lichtsignale im optisch dichteren Medium laufen. Bei einer derartigen Totalreflexion werden die Lichtsignale ohne oder zumindest ohne Wesentliche Abschwächung an der Grenzfläche reflektiert, wodurch eine Reichweite eines ausgesandten Lichtsignals in einer erfindungsgemäßen Übertragungsvorrichtung im Inneren der Temperierfluidleitung deutlich gesteigert werden kann. Mit anderen Worten kann bei einem erfindungsgemäßen System Totalreflexion der Lichtsignale auftreten, wenn beispielsweise die Temperierfluidleitung zwei für das Lichtsignal transparente Bereiche mit unterschiedlich großen Brechungsindizes aufweist, wobei der Bereich mit dem größeren Brechungsindex radial innen angeordnet ist und der Bereich mit kleinerem Brechungsindex radial außen, den ersten Bereich kontaktierend umgebend. Alternativ oder zusätzlich kann auch vorgesehen sein, dass die Grenzfläche zwischen dem Temperierfluid und der Innenwandung zur Bereitstellung der Totalreflexion verwendet wird. Dazu kann vorgesehen sein, dass das Temperierfluid, das transparent oder zumindest teilweise transparent für die Lichtsignale ausgebildet ist, einen größeren Brechungsindex aufweist, als die das Temperierfluid umgebende Innenwandung der Temperierfluidleitung, wobei bevorzugt auch diese Innenwandung transparent für die Lichtsignale ausgebildet sein kann. Insgesamt ist durch beide Ausgestaltungsformen eine Bereitstellung einer Totalreflexion für die Lichtsignale besonders einfach möglich. Eine besonders gute und verlustarme Übertragung der Lichtsignale durch die Temperierleitung beziehungsweise das Temperierfluid ist auf diese Weise bereitstellbar.

Darüber hinaus kann bei einem erfindungsgemäßen System vorgesehen sein, dass die Temperierfluidleitung zwischen einem ersten Anordnungsort der ersten Kommunikationseinheit und einem zweiten Anordnungsort der zweiten Kommunikationseinheit gerade oder zumindest im Wesentlichen gerade ausgebildet ist. Insbesondere Biegungen, Kurven und/oder Knicke in der Temperierfluidleitung können zu einer großen Dämpfung und schlimmstenfalls zu einem Blockieren eines Lichtsignals im Temperierfluid führen. Durch eine Anordnung der Kommunikationseinheiten der Sensorschnittstelle und der Kontrollschnittstelle in einem Bereich der Temperierfluidleitung, der gerade oder zumindest im Wesentlichen gerade ausgebildet ist, kann eine Verringerung der Signalstärke an eben einer derartigen Ecke, Kante und/oder einem derartigen Knick, vermieden werden. Analog gilt dies auch für das Anordnen einer Zwischenverstärkereinheit und insbesondere deren dritten Kommunikationseinheit. So ist es insgesamt von Vorteil, wenn die Temperierfluidleitung zwischen zwei Kommunikationseinheiten gerade oder zumindest im Wesentlichen gerade ausgebildet ist, unabhängig davon, ob die Kommunikationseinheit zu einer Kontrollschnittstelle, einer Sensorschnittstelle oder einer Zwischenverstärkereinheit gehört.

Gemäß einem vierten Aspekt der Erfindung wird die Aufgabe gelöst durch ein Batteriesystem, aufweisend zumindest eine Batteriezelle und ein System aus einer Temperiervorrichtung und einer Datenerfassungsvorrichtung für ein Batteriesystem. Ein erfindungsgemäßes Batteriesystem ist dadurch gekennzeichnet, dass das System gemäß dem dritten Aspekt der Erfindung ausgebildet ist. Ein erfindungsgemäßes System gemäß dem dritten Aspekt der Erfindung weist insbesondere eine Übertragungsvorrichtung gemäß dem ersten Aspekt der Erfindung und/oder eine Datenerfassungsvorrichtung gemäß dem zweiten Aspekt der Erfindung auf. Insgesamt können somit sämtliche Vorteile, die ausführlich in Bezug auf ein System gemäß dem dritten Aspekt der Erfindung, in Bezug auf eine Übertragungsvorrichtung gemäß dem ersten Aspekt der Erfindung und/oder in Bezug auf eine Datenerfassungsvorrichtung gemäß dem zweiten Aspekt der Erfindung beschrieben worden sind, auch durch ein Batteriesystem gemäß dem vierten Aspekt der Erfindung bereitgestellt werden, welches ein derartiges System, eine derartige Übertragungsvorrichtung und/oder eine derartige Datenerfassungsvorrichtung aufweist.

Gemäß einem fünften Aspekt der Erfindung wird die Aufgabe gelöst durch ein Verfahren zum Übertragen von Zustandsdaten einer Batteriezelle in einem Batteriesystem gemäß dem vierten Aspekt der Erfindung. Ein erfindungsgemäßes Verfahren ist dadurch gekennzeichnet, dass die Zustandsdaten zumindest abschnittsweise als Lichtsignale im Temperierfluid übertragen werden. Durch den Einsatz in einem erfindungsgemäßen Batteriesystem gemäß dem vierten Aspekt der Erfindung können somit auch durch ein Verfahren gemäß dem fünften Aspekt der Erfindung sämtliche Vorteile, die ausführlich in Bezug auf ein erfindungsgemäßes Batteriesystem gemäß dem vierten Aspekt der Erfindung beschrieben worden sind, bereitgestellt werden. Da ein erfindungsgemäßes Batteriesystem gemäß dem vierten Aspekt der Erfindung eine Datenübertragungsvorrichtung gemäß dem ersten Aspekt der Erfindung, eine Datenerfassungsvorrichtung gemäß dem zweiten Aspekt der Erfindung und/oder ein System gemäß dem dritten Aspekt der Erfindung umfasst, können auch die Vorteile, die ausführlich in Bezug auf diese Aspekte der Erfindung beschrieben worden sind, durch ein erfindungsgemäßes Verfahren gemäß dem fünften Aspekt der Erfindung bereitgestellt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Die Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Es zeigen schematisch:
- Fig. 1: ein erfindungsgemäßes Batteriesystem in einer ersten Ausgestaltungsform, und
- Fig. 2: ein erfindungsgemäßes Batteriesystem gemäß einer zweiten Ausgestaltungsform.

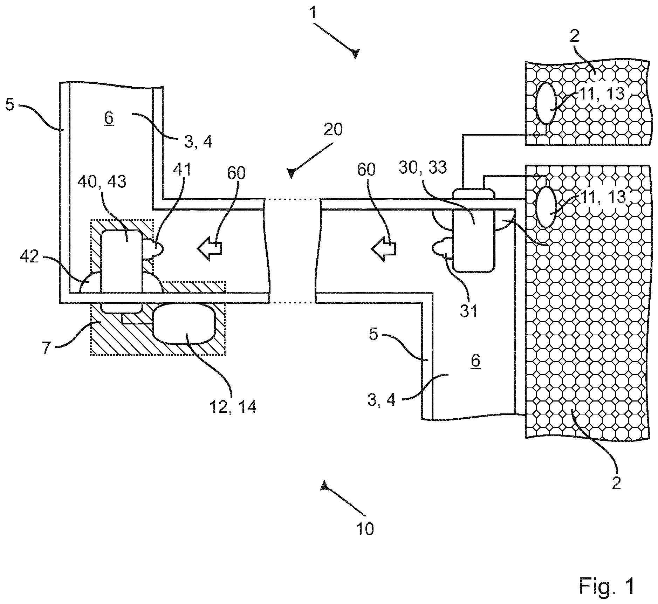

Fig. 1 zeigt ein erfindungsgemäßes Batteriesystem 1 in einer ersten Ausgestaltungsvariante. Das Batteriesystem 1 weist mehrere Batteriezellen 2 auf, von denen zwei Batteriezellen 2 mit abgebildet sind. An beiden Batteriezellen 2 ist jeweils eine Sensoreinheit 13 einer Sensorvorrichtung 11 angeordnet, um Zustandsdaten der jeweiligen Batteriezelle 2 zu erfassen, beispielsweise eine Temperatur oder elektrische Größen wie zum Beispiel eine Spannung oder ein Strom. Ferner ist eine Temperiervorrichtung 3 des Batteriesystems 1 gezeigt, wobei insbesondere eine Temperierfluidleitung 4 abgebildet ist, in der ein Temperierfluid 6 geleitet ist. Durch das Temperierfluid 6 wird Wärmeenergie von den einzelnen Batteriezellen 2 weggeleitet und diese dadurch temperiert. Ein erfindungsgemäßes Batteriesystem 1 ist ferner insbesondere mit einer erfindungsgemäßen Datenerfassungsvorrichtung 10 ausgestattet. Die oben bereits beschriebenen Sensorvorrichtungen 11 sind Teil dieser Datenerfassungsvorrichtung 10. Weitere Teile sind eine Kontrollvorrichtung 12, die beispielsweise eine Auswerteeinheit 14 aufweist, sowie eine erfindungsgemäße Übertragungsvorrichtung 20. In der dargestellten Ausgestaltungsform weist die Übertragungsvorrichtung 20 eine Kontrollschnittstelle 40 und eine Sensorschnittstelle 30 auf. Die Sensorschnittstelle 30 ist datenkommunizierend mit den Sensoreinheiten 13 der Sensorvorrichtung 11 verbunden. Analog ist die Kontrollschnittstelle 40 datenkommunizierend mit der Auswerteeinheit 14 der Kontrollvorrichtung 12 verbunden. Auch ist hier die Kontrollvorrichtung 12, insbesondere die Auswerteeinheit 14, und die Kontrollschnittstelle 40 auf derselben Platine 7 angeordnet, wodurch zum einen die Übertragungswege zwischen der Kontrollschnittstelle 40, insbesondere der zweiten Kommunikationseinheit 41 der Kontrollschnittstelle 40, und der Auswerteeinheit 14 minimiert werden können und zum anderen ein Anordnen der Auswerteeinheit 14 der Kontrollvorrichtung 12 in der Nähe der Temperierfluidleitung 4 besonders einfach möglich ist. Ein Temperieren der Auswerteeinheit 14 durch die Temperiervorrichtung 3 des Batteriesystems 1 kann auf diese Weise besonders einfach bereitgestellt werden.

Erfindungswesentlich weisen die Sensorschnittstelle 30 eine erste Kommunikationseinheit 31 und die Kontrollschnittstelle 40 eine zweite Kommunikationseinheit 41 auf. Beide Kommunikationseinheiten 30, 41 sind in der dargestellten Ausgestaltungsform zum Aussenden und Empfangen von Lichtsignalen 60 in bzw. aus dem Temperierfluid 6 ausgebildet. Das Temperierfluid 6 ist dafür bevorzugt transparent für die Lichtsignale 60 ausgebildet. Die Kommunikationseinheiten 31, 41 können dafür beispielsweise mit LED-Elementen zum Aussenden und/oder Fotosensor-Elementen zum Empfangen der Lichtsignale 60 ausgestattet sein. Um dies bereitstellen zu können, weisen ferner die Sensorschnittstelle 30 einen ersten Anordnungsabschnitt 32 auf, um die erste Kommunikationseinheit 31 im Inneren der Temperierfluidleitung 4 anordnen zu können. Analog weist die Kontrollschnittstelle 40 einen zweiten Anordnungsabschnitt 42 auf, um die zweite Kommunikationseinheit 41 ebenfalls im Inneren der Temperierfluidleitung 4 anordnen zu können. Bevorzugt sind, wie abgebildet, die erste Kommunikationseinheit 31 der Sensorschnittstelle 30 an einem ersten Anordnungsort 33 sowie die zweite Kommunikationseinheit 41 der Kontrollschnittstelle 40 einem zweiten Anordnungsort 43 derart angeordnet, dass die Temperierfluidleitung 41 zwischen dem ersten 33 und den zweiten Anordnungsort 43 gerade oder zumindest im Wesentlichen gerade ist. Eine Schwächung des Lichtsignals 60 durch Ecken, Kanten oder Biegungen der Temperierfluidleitung 4 kann dadurch vermieden werden. Ferner weist die Temperierfluidleitung 4 eine Innenwandung 5 auf. Bereits die Innenwandung 5 selbst kann zur Bereitstellung einer Totalreflexion zwei Bereiche mit unterschiedlichem Brechungsindex aufweisen, wobei der Bereich mit größerem Brechungsindex radial weiter innen angeordnet ist. Alternativ oder zusätzlich kann auch eine Grenzschicht zwischen der Innenwandung 5 der Temperierfluidleitung 4 und dem Temperierfluid 6 zur Bereitstellung der Totalreflexion verwendet werden, wobei in dieser Ausgestaltungsform das Temperierfluid 6 einen größeren Brechungsindex aufweist als die Innenwandung 5 der Temperierfluidleitung 4. Insgesamt kann durch eine Totalreflexion eine Schwächung einer Signalstärke des Lichtsignals 60 vermieden oder zumindest deutlich eingeschränkt werden. Für eine Übertragung der Zustandsdaten, die durch die Sensoreinheiten 13 der Sensorvorrichtung 11 erfasst werden, sendet nun die erste Kommunikationseinheit 31 der Sensorschnittstelle 30 Lichtsignale 60 in das, bevorzugt transparente, Temperierfluid 6 aus. Diese Lichtsignale 60 werden im Temperierfluid 6 weitergeleitet und durch die zweite Kommunikationseinheit 41 der Kontrollschnittstelle 40 empfangen. Mit anderen Worten wird in einem erfindungsgemäßen Batteriesystem 1, das eine erfindungsgemäße Datenerfassungsvorrichtung 10 und somit eine erfindungsgemäße Übertragungsvorrichtung 20, aufweist, die Temperierfluidleitung 4 beziehungsweise das Temperierfluid 6 zum Übertragen der Lichtsignale 60, die die Zustandsdaten beinhalten, verwendet. Zusätzliche Leitungen und/oder Kabel zur Übertragung der Zustandsdaten können vermieden werden. Ferner ist die dargestellte Sensorschnittstelle 30 mit zwei Sensoreinheiten 13 der Sensorvorrichtung 11 verbunden. Um die Zustandsdaten den einzelnen Batteriezellen 2 zuordnen zu können, kann beispielsweise vorgesehen sein, dass die erste Kommunikationseinheit 31 zum Modulieren des ausgesandten Lichtsignals 60 hinsichtlich einer Frequenz, einer Pulsweite und/oder einer Amplitude des ausgesandten Lichtsignals 60 ausgebildet ist. Auch ein Digitalisieren der Zustandsdaten und Kodierung der jeweiligen Batteriezelle 2 beispielsweise in einem Kopfabschnitt eines Datenpakets ist denkbar. Auf diese Weise kann bereits mit einer einzigen ersten Kommunikationseinheit 31 eine Vielzahl von Batteriezellen 2 identifiziert werden.

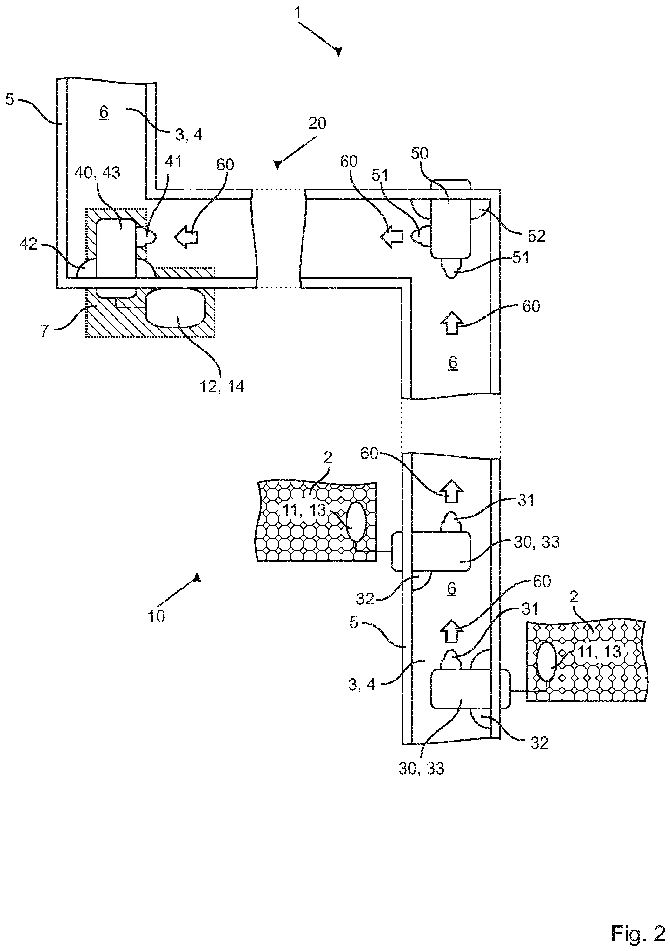

Fig. 2 zeigt eine weitere Ausgestaltungsform eines erfindungsgemäßen Batteriesystems 1. Die Kontrollschnittstelle 40 und deren Bestandteile sowie die Kontrollvorrichtungen 12 und deren Bestandteile sind analog zu der in Fig. 1 gezeigten Ausgestaltungsform aufgebaut, so dass auf die dortige Beschreibung verwiesen wird. Auch in der in Fig. 2 dargestellten Ausgestaltungsform eines erfindungsgemäßen Batteriesystems 1 sind zwei Batteriezellen 2 gezeigt, die jeweils durch eine Sensoreinheit 13 der Sensorvorrichtung 11 überwacht werden. Unterschiedlich zu der in Fig. 1 gezeigten Ausgestaltungsvariante ist hier für jede der Sensoreinheiten 13 eine eigene erste Kommunikationseinheit 31 einer Sensorschnittstelle 30 vorgesehen. Auf diese Weise ist ebenfalls eine Unterscheidung der jeweiligen Batteriezellen 2, von denen die Zustandsdaten erfasst wurden, möglich. Die Temperierfluidleitung 4 weist wiederum eine Innenwandung 5 auf, die, alleine für sich oder durch Zusammenwirken mit dem Temperierfluid 6, zum Bewirken einer Totalreflexion der Lichtsignale 60 ausgebildet ist. Auch in dieser Ausgestaltungsform eines erfindungsgemäßen Systems aus einer Datenerfassungsvorrichtung 10 und einer Temperiervorrichtung 3 eines Batteriesystems 1 kann durch eine Totalreflexion der Lichtsignale 60 eine Verminderung der Signalstärke des Lichtsignals 60 vermieden werden. Ferner ist in der dargestellten Ausgestaltungsform eine Zwischenverstärkereinheit 50 gezeigt, die eine dritte Kommunikationseinheit 51 aufweist, welche durch einen dritten Anordnungsabschnitt 52 ebenfalls im Inneren der Temperierfluidleitung 4 angeordnet ist. Die dritte Kommunikationseinheit 51 ist zum Senden und Empfangen der Lichtsignale 60 ausgebildet, so dass eine Weiterleitung der Lichtsignale 60 beispielsweise von der Sensorschnittstelle 30 kommend an die Kontrollschnittstelle 40 ermöglicht werden kann. Auch der umgekehrte Datentransfer, wie er beispielsweise bei einer bidirektionalen Datenübertragung vorkommen kann, kann durch eine derartige Zwischenverstärkereinheit 50 bereitgestellt werden. In der dargestellten Ausgestaltungsform ist die Zwischenverstärkereinheit 50 an einer Biegung der Temperierfluidleitung 4 angeordnet. Alternativ oder zusätzlich können derartige Zwischenverstärkereinheiten 50 auch an Positionen innerhalb der Temperierfluidleitung 4 angeordnet sein, an denen bereits ein Abfall an Signalstärke der Lichtsignale 60 auftreten kann. Durch eine Verstärkung des Lichtsignals 60 im Inneren der Zwischenverstärkereinheit 50 und ein erneutes Aussenden des Lichtsignals 60 kann die Reichweite der Lichtsignale 60 im Inneren der Temperierfluidleitung 4 deutlich gesteigert werden. Beinahe beliebige Entfernungen zwischen der Kontrollschnittstelle 40 und der Sensorschnittstelle 30 einer erfindungsgemäßen Übertragungsvorrichtung 20 können auf diese Weise bereitgestellt werden.

### Bezugszeichen

- 1: Batteriesystem
- 2: Batteriezelle
- 3: Temperiervorrichtung
- 4: Temperierfluidleitung
- 5: Innenwandung
- 6: Temperierfluid
- 7: Platine

- 10: Datenerfassungsvorrichtung
- 11: Sensorvorrichtung
- 12: Kontrollvorrichtung
- 13: Sensoreinheit
- 14: Auswerteeinheit

- 20: Übertragungsvorrichtung

- 30: Sensorschnittstelle
- 31: erste Kommunikationseinheit
- 32: erster Anordnungsabschnitt
- 33: erster Anordnungsort

- 40: Kontrollschnittstelle
- 41: zweite Kommunikationseinheit
- 42: zweiter Anordnungsabschnitt
- 43: zweiter Anordnungsort

- 50: Zwischenverstärkereinheit
- 51: dritte Kommunikationseinheit
- 52: dritter Anordnungsabschnitt

- 60: Lichtsignal

## Patentansprüche

1. Übertragungsvorrichtung (20) zum Übertragen von Zustandsdaten für ein Batteriesystem (1) mit zumindest einer Batteriezelle (2) und einer Temperiervorrichtung (3) zum Temperieren der zumindest einen Batteriezelle (2) mit einem zumindest abschnittsweise in einer Temperierfluidleitung (4) geleiteten Temperierfluid (6), die Übertragungsvorrichtung (20) aufweisend eine Sensorschnittstelle (30) zur datenkommunizierenden Verbindung mit einer Sensorvorrichtung (11) zur Ermittlung von Zustandsdaten der zumindest einen Batteriezelle (2) und eine Kontrollschnittstelle (40) zur datenkommunizierenden Verbindung mit einer Kontrollvorrichtung (12) zur Verarbeitung der Zustandsdaten, **dadurch gekennzeichnet, dass** die Sensorschnittstelle (30) eine erste Kommunikationseinheit (31) zum Aussenden von Lichtsignalen (60) in das Temperierfluid (6) und einen ersten Anordnungsabschnitt (32) zum Anordnen der ersten Kommunikationseinheit (31) in der Temperierfluidleitung (4) aufweist und die Kontrollschnittstelle (40) eine zweite Kommunikationseinheit (41) zum Empfangen von Lichtsignalen (60) aus dem Temperierfluid (6) und einen zweite Anordnungsabschnitt (42) zum Anordnen der zweiten Kommunikationseinheit (41) in der Temperierfluidleitung (4) aufweist, wobei die Übertragungsvorrichtung eingerichtet ist, zum Übertragen der Zustandsdaten Lichtsignale (60) durch die erste Kommunikationseinheit (31) der Sensorschnittstelle (30) in das Temperierfluid (6) auszusenden und durch die zweite Kommunikationseinheit (41) der Kontrollschnittstelle aus dem Temperierfluid (6) zu empfangen.

2. Übertragungsvorrichtung (20) nach Anspruch 1, **dadurch gekennzeichnet, dass** die Lichtsignale (60) phasensynchron oder zumindest im Wesentlichen phasensynchron und/oder monochromatisch oder zumindest im Wesentlichen monochromatisch sind, insbesondere dass die Lichtsignale (60) aus phasensynchronen und monochromatischen Laserlicht gebildet sind.

3. Übertragungsvorrichtung (20) nach Anspruch 1 oder 2, **dadurch gekennzeichnet, dass** zur Bereitstellung einer bidirektionalen Übertragung die erste Kommunikationseinheit (31) zum Empfangen von Lichtsignalen (60) aus dem Temperierfluid (6) und die zweite Kommunikationseinheit (41) zum Senden von Lichtsignalen (60) in das Temperierfluid (6) ausgebildet sind.

4. Übertragungsvorrichtung (20) nach einem der vorangegangenen Ansprüche, **dadurch gekennzeichnet, dass** die Übertragungsvorrichtung (20) eine Zwischenverstärkereinheit (50) mit zumindest einer dritten Kommunikationseinheit (51) zum Aussenden und Empfangen von Lichtsignalen (60) in das beziehungsweise aus dem Temperierfluid (6) und einen dritten Anordnungsabschnitt (52) zum Anordnen der dritten Kommunikationseinheit (51) in der Temperierfluidleitung (4) aufweist, wobei im angeordneten Zustand durch die zumindest eine dritte Kommunikationseinheit (51) der Zwischenverstärkereinheit (50) Lichtsignale (60) der ersten Kommunikationseinheit (31) und/oder zweiten Kommunikationseinheit (41) aus dem Temperierfluid (6) empfangbar und an die zweite Kommunikationseinheit (41) und/oder erste Kommunikationseinheit (31) in das Temperierfluid (6) aussendbar sind.

5. Übertragungsvorrichtung (20) nach einem der vorangegangenen Ansprüche, **dadurch gekennzeichnet, dass** die die erste (31) und/oder die zweite (41) und/oder die dritte Kommunikationseinheit (51) zum Aussenden von Lichtsignalen (60) ein LED-Element und/oder zum Empfangen von Lichtsignalen (60) ein Fotosensor-Element aufweisen.

6. Datenerfassungsvorrichtung (10) zur Erfassung von Zustandsdaten eines Batteriesystems (1), das Batteriesystem (1) aufweisend zumindest eine Batteriezelle (2) und eine Temperiervorrichtung (3) zum Temperieren der zumindest einen Batteriezelle (2) mit einem zumindest abschnittsweise in einer Temperierfluidleitung (4) geleiteten Temperierfluid (6), die Datenerfassungsvorrichtung (10) aufweisend eine Sensorvorrichtung (11) mit zumindest einer Sensoreinheit (13) zur Ermittlung der Zustandsdaten der zumindest einen Batteriezelle (2), eine Kontrollvorrichtung (12) zur Verarbeitung der Zustandsdaten und eine Übertragungsvorrichtung (20) zum Übertragen der Zustandsdaten, **dadurch gekennzeichnet, dass** die Übertragungsvorrichtung (20) nach einem der vorangegangenen Ansprüchen ausgebildet ist.

7. Datenerfassungsvorrichtung (10) nach Anspruch 7, **dadurch gekennzeichnet, dass** die Kontrollvorrichtung (12) eine Auswerteeinheit (14) zur Verarbeitung der Zustandsdaten aufweist, wobei zumindest die Auswerteeinheit (14) und die zweite Kommunikationseinheit (41) auf einer gemeinsamen Platine (7) angeordnet sind.

8. Datenerfassungsvorrichtung (10) nach Anspruch 6 oder 7, **dadurch gekennzeichnet, dass** die zumindest eine Sensoreinheit (13) zum Erfassen zumindest eines der folgenden Zustandsdaten ausgebildet ist:
- Temperatur
- Spannung
- Strom
- Leckage

9. Datenerfassungsvorrichtung (10) nach Anspruch 6 bis 8, **dadurch gekennzeichnet, dass** die Sensorvorrichtung (11) zwei oder mehr Sensoreinheiten (13) zum Erfassen von Zustandsdaten von zwei oder mehr Batteriezellen (2) aufweist, wobei bevorzugt jeder der zumindest zwei Batteriezellen (2) zumindest eine Sensoreinheit (13) zugeordnet ist.

10. Datenerfassungsvorrichtung (10) nach Anspruch 9, **dadurch gekennzeichnet, dass** zur Unterscheidung der Batteriezellen (2) die Übertragungsvorrichtung (20) für jede zugeordnete Batteriezelle (2) zumindest eine erste Kommunikationseinheit (31) aufweist, wobei jede der ersten Kommunikationseinheiten (31) mit der Sensoreinheit (13), welche der jeweiligen Batteriezelle (2) zugeordnet ist, über die Sensorschnittstelle (30) datenkommunizierend verbunden ist.

11. Datenerfassungsvorrichtung (10) nach Anspruch 9 oder 10, **dadurch gekennzeichnet, dass** die erste Kommunikationseinheit (31) zum Aussenden von Lichtsignalen (60) ausgebildet ist, die zur Unterscheidung der erfassten Batteriezellen (2) frequenzmoduliert, pulsweitenmoduliert und/oder amplitudenmoduliert sind.

12. System aus einer Temperiervorrichtung (3) und einer Datenerfassungsvorrichtung (10) für ein Batteriesystem (1), das Batteriesystem (1) aufweisend zumindest eine Batteriezelle (2), die Temperiervorrichtung (3) aufweisend ein zumindest abschnittsweise in einer Temperierfluidleitung (4) geleitetes Temperierfluid (6) zum Temperieren der zumindest einen Batteriezelle (2), die Datenerfassungsvorrichtung (10) aufweisend eine Sensorvorrichtung (11) zur Ermittlung von Zustandsdaten der zumindest einen Batteriezelle (2), eine Kontrollvorrichtung (12) zur Verarbeitung der Zustandsdaten und eine Übertragungsvorrichtung (20) zum Übertragen der Zustandsdaten, **dadurch gekennzeichnet, dass** die Übertragungsvorrichtung (20) nach einem der vorangegangenen Ansprüche 1 bis 5 und/oder die Datenerfassungsvorrichtung (10) nach einem der vorangegangenen Ansprüche 6 bis 11 ausgebildet ist.

13. System nach Anspruch 12, **dadurch gekennzeichnet, dass** zur Bereitstellung einer Totalreflexion der Lichtsignale (60) die Temperierfluidleitung (4) eine Innenwandung (5) mit zumindest zwei unterschiedlichen Brechungsindizes aufweist, und/oder dass die Temperierfluidleitung (4) eine Innenwandung (5) aufweist, wobei die Innenwandung (5) und das Temperierfluid (6) zwei unterschiedliche Brechungsindizes aufweisen.

14. System nach Anspruch 12 oder 14, **dadurch gekennzeichnet, dass** die Temperierfluidleitung (4) zwischen einem ersten Anordnungsort (33) der ersten Kommunikationseinheit (31) und einem zweiten Anordnungsort (43) der zweiten Kommunikationseinheit (41) gerade oder zumindest im Wesentlichen gerade ausgebildet ist.

15. Batteriesystem (1), aufweisend zumindest eine Batteriezelle (2) und ein System aus einer Temperiervorrichtung (3) und einer Datenerfassungsvorrichtung (10) für ein Batteriesystem (1) **dadurch gekennzeichnet, dass** das System nach einem der Ansprüche 12 bis 13 ausgebildet ist.

16. Verfahren zum Übertragen von Zustandsdaten einer Batteriezelle (2) in einem Batteriesystem (1) gemäß Anspruch 13, **dadurch gekennzeichnet,** das die Zustandsdaten zumindest abschnittsweise als Lichtsignale (60) im Temperierfluid (6) übertragen werden.

## Claims

1. Transmission device (20) for transmitting status data for a battery system (1) comprising at least one battery cell (2) and a temperature control device (3) for temperature control of the at least one battery cell (2) with a temperature control fluid (6) conveyed at least partially in a temperature control fluid line (4), the transmission device (20) comprising a sensor interface (30) for data-communicating connection to a sensor device (11) for determining status data of the at least one battery cell (2) and a controlling interface (40) for data-communicating connection to a controlling device (12) for processing the status data,
**characterized in that**
the sensor interface (30) comprises a first communication unit (31) for emitting light signals (60) into the temperature control fluid (6) and a first arrangement section (32) for arranging the first communication unit (31) in the temperature control fluid line (4) and the control interface (40) comprises a second communication unit (41) for receiving light signals (60) from the temperature control fluid (6) and a second arrangement section (42) for arranging the second communication unit (41) in the temperature control fluid line (4), wherein the transmission device is adapted to emit light signals (60) into the temperature control fluid (6) through the first communication unit (31) of the sensor interface (30) for transmitting the status data and to receive them from the temperature control fluid (6) through the second communication unit (41) of the control interface (40).

2. Transmission device (20) according to claim 1,
**characterized in that**
the light signals (60) are phase-synchronous or at least substantially phase-synchronous and/or monochromatic or at least substantially monochromatic, wherein in particular the light signals (60) are formed of phase-synchronous and monochromatic laser light.

3. Transmission device (20) according to claim 1 or 2,
**characterized in that,**
in order to provide bidirectional transmission, the first communication unit (31) is designed to receive light signals (60) from the temperature control fluid (6) and the second communication unit (41) is designed to emit light signals (60) into the temperature control fluid (6).

4. Transmission device (20) according to any one of the preceding claims,
**characterized in that**
the transmission device (20) comprises an intermediate amplifier unit (50) with at least one third communication unit (51) for emitting and receiving light signals (60) into and out of the temperature control fluid (6), respectively, and a third arranging section (52) for arranging the third communication unit (51) in the temperature control fluid line (4), wherein, in the arranged state, light signals (60) of the first communication unit (31) and/or second communication unit (41) can be received from the temperature control fluid (6) by the at least one third communication unit (51) of the intermediate amplifier unit (50) and can be emitted to the second communication unit (41) and/or first communication unit (31) into the temperature control fluid (6).

5. Transmission device (20) according to any one of the preceding claims,
**characterized in that**
the first (31) and/or the second (41) and/or the third communication unit (51) comprise an LED element for emitting light signals (60) and/or a photosensor element for receiving light signals (60).

6. Data acquisition device (10) for acquiring status data of a battery system (1), the battery system (1) comprising at least one battery cell (2) and a temperature control device (3) for temperature control of the at least one battery cell (2) with a temperature control fluid (6) conveyed at least partially in a temperature control fluid line (4), the data acquisition device (10) comprising a sensor device (11) with at least one sensor unit (13) for determining the status data of the at least one battery cell (2), a controlling device (12) for processing the status data and a transmission device (20) for transmitting the status data,
**characterized in that**
the transmission device (20) is designed according to one of the preceding claims.

7. Data acquisition device (10) according to claim 7,
**characterized in that**
the controlling device (12) comprises an evaluation unit (14) for processing the status data, wherein at least the evaluation unit (14) and the second communication unit (41) are arranged on a common board (7).

8. Data acquisition device (10) according to claim 6 or 7,
**characterized in that**
the at least one sensor unit (13) is configured to acquire at least one of the following status data:
- temperature
- voltage
- current
- leakage

9. Data acquisition device (10) according to claim 6 to 8,
**characterized in that**
the sensor device (11) comprises two or more sensor units (13) for acquiring status data of two or more battery cells (2), wherein preferably at least one sensor unit (13) is associated with each of the at least two battery cells (2).

10. Data acquisition device (10) according to claim 9,
**characterized in that**
for distinguishing the battery cells (2), the transmission device (20) comprises at least one first communication unit (31) for each associated battery cell (2), wherein each of the first communication units (31) is data-communicatively connected to the sensor unit (13) associated with the respective battery cell (2) via the sensor interface (30).

11. Data acquisition device (10) according to claim 9 or 10,
**characterized in that**
the first communication unit (31) is adapted to emit light signals (60) which are frequency modulated, pulse width modulated and/or amplitude modulated to distinguish the acquired battery cells (2).

12. System comprising a temperature control device (3) and a data acquisition device (10) for a battery system (1), the battery system (1) comprising at least one battery cell (2), the temperature control device (3) comprising a temperature control fluid (6), which is conveyed at least partially in a temperature control fluid line (4), for temperature control of the at least one battery cell (2), the data acquisition device (10) comprising a sensor device (11) for determining status data of the at least one battery cell (2), a controlling device (12) for processing the status data and a transmission device (20) for transmitting the status data,
**characterized in that**
the transmission device (20) is designed according to one of the preceding claims 1 to 5 and/or the data acquisition device (10) is designed according to one of the preceding claims 6 to 11.

13. System according to claim 12,
**characterized in that**
for providing a total reflection of the light signals (60) the temperature control fluid line (4) comprises an inner wall (5) with at least two different refractive indices, and/or the temperature control fluid line (4) comprises an inner wall (5), wherein the inner wall (5) and the temperature control fluid (6) comprise two different refractive indices.

14. System according to claim 12 or 14,
**characterized in that**
the temperature control fluid line (4) is straight or at least substantially straight between a first arrangement location (33) of the first communication unit (31) and a second arrangement location (43) of the second communication unit (41).

15. Battery system (1), comprising at least one battery cell (2) and a system of a temperature control device (3) and a data acquisition device (10) for a battery system (1),
**characterized in that**
the system is designed according to one of claims 12 to 13.

16. Method for transmitting status data of a battery cell (2) in a battery system (1) according to claim 13,
**characterized in**
**that** the status data are transmitted at least partially as light signals (60) in the temperature control fluid (6).

## Revendications

1. Dispositif de transmission (20) pour transmettre des données d'état pour un système de batteries (1) comprenant au moins une cellule de batterie (2) et un dispositif de régulation de température (3) pour réguler la température du au moins une cellule de batterie (2) avec un fluide de régulation de température (6) conduit au moins en partie dans une conduite de fluide de régulation de température (4), le dispositif de transmission (20) ayant une interface de capteur (30) pour une connexion de communication de données avec un dispositif de capteur (11) pour déterminer des données d'état de l'au moins une cellule de batterie (2) et une interface de contrôle (40) pour une connexion de communication de données avec un dispositif de contrôle (12) pour traiter les données d'état,
**caractérisé en ce que**
l'interface de capteur (30) présente une première unité de communication (31) pour émettre des signaux lumineux (60) dans le fluide de régulation de température (6) et une première section d'agencement (32) pour agencer la première unité de communication (31) dans la conduite de fluide de régulation de température (4) et l'interface de contrôle (40) comprend une deuxième unité de communication (41) pour recevoir des signaux lumineux (60) provenant du fluide de régulation de température (6) et une deuxième section d'agencement (42) pour agencer la deuxième unité de communication (41) dans la conduite de fluide de régulation de température (4), dans lequel le dispositif de transmission est adapté pour émettre des signaux lumineux (60) dans le fluide de régulation de température (6) pour transmettre les données d'état par l'intermédiaire de la première unité de communication (31) de l'interface de capteur (30) et pour les recevoir du fluide de régulation de température (6) par l'intermédiaire de la deuxième unité de communication (41) de l'interface de contrôle (40).

2. Dispositif de transmission (20) selon la revendication 1,
**caractérisé en ce que**
les signaux lumineux (60) sont en phase-synchrone ou au moins sensiblement en phase-synchrone et/ou monochromatiques ou au moins sensiblement monochromatiques, en particulier les signaux lumineux (60) sont formés de lumière laser en phase-synchrone et monochromatique.

3. Dispositif de transmission (20) selon la revendication 1 ou 2,
**caractérisé en ce que,**
pour assurer une transmission bidirectionnelle, la première unité de communication (31) est conçue pour recevoir des signaux lumineux (60) du fluide de régulation de température (6) et la deuxième unité de communication (41) est conçue pour émettre des signaux lumineux (60) dans le fluide de régulation de température (6).

4. Dispositif de transmission (20) selon l'une des revendications précédentes,
**caractérisé en ce que**
le dispositif de transmission (20) comprend une unité de répéteur intermédiaire (50) ayant au moins une troisième unité de communication (51) pour émettre et recevoir des signaux lumineux (60) dans et hors du fluide de régulation de température (6), respectivement, et une troisième section d'agencement (52) pour agencer la troisième unité de communication (51) dans la conduite de fluide de régulation de température (4), dans lequel, dans l'état agencé, des signaux lumineux (60) de la première unité de communication (31) et/ou de la deuxième unité de communication (41) peuvent être reçus du fluide de régulation de température (6) par la au moins une troisième unité de communication (51) de l'unité de répéteur intermédiaire (50) et peuvent être émis vers la deuxième unité de communication (41) et/ou la première unité de communication (31) dans le fluide de régulation de température (6).

5. Dispositif de transmission (20) selon l'une des revendications précédentes,
**caractérisé en ce que**
la première (31) et/ou la deuxième (41) et/ou la troisième unité de communication (51) comprennent un élément LED pour émettre des signaux lumineux (60) et/ou un élément photocapteur pour recevoir des signaux lumineux (60).

6. Dispositif d'acquisition de données (10) pour acquérir des données d'état d'un système de batteries (1), le système de batteries (1) comprenant au moins une cellule de batterie (2) et un dispositif de régulation de température (3) pour réguler la température du au moins une cellule de batterie (2) avec un fluide de régulation de température (6) conduit au moins en partie dans une conduite de fluide de régulation de température (4), le dispositif d'acquisition de données (10) présente un dispositif de capteur (11) avec au moins une unité de capteur (13) pour déterminer les données d'état de l'au moins une cellule de batterie (2), un dispositif de contrôle (12) pour traiter les données d'état et un dispositif de transmission (20) pour transmettre les données d'état,
**caractérisé en ce que**
le dispositif de transmission (20) est conçu selon l'une des revendications précédentes.

7. Dispositif d'acquisition de données (10) selon la revendication 7,
**caractérisé en ce que**
le dispositif de contrôle (12) présente une unité d'évaluation (14) pour le traitement des données d'état, au moins l'unité d'évaluation (14) et la deuxième unité de communication (41) étant disposées sur une platine commune (7).

8. Dispositif d'acquisition de données (10) selon la revendication 6 ou 7,
**caractérisé en ce que**
l'au moins une unité de capteur (13) est configurée pour acquérir au moins une des données d'état suivantes :
- température
- voltage
- courant
- fuite

9. Dispositif d'acquisition de données (10) selon les revendications 6 à 8,
**caractérisé en ce que**
le dispositif de capteur (11) comprend deux ou plusieurs unités de capteur (13) pour acquérir des données d'état de deux ou plusieurs cellules de batterie (2), de préférence au moins une unité de capteur (13) étant associée à chacun des au moins deux cellules de batterie (2).

10. Dispositif d'acquisition de données (10) selon la revendication 9,
**caractérisé en ce que**
pour distinguer les cellules de batterie (2), le dispositif de transmission (20) comprend au moins une première unité de communication (31) pour chaque cellule de batterie (2) associée, chacune des premières unités de communication (31) étant reliée par communication de données à l'unité de capteur (13) associée au cellule de batterie (2) respective via l'interface de capteur (30).

11. Dispositif d'acquisition de données (10) selon la revendication 9 ou 10,
**caractérisé en ce que**
la première unité de communication (31) est adaptée pour émettre des signaux lumineux (60) qui sont modulés en fréquence, modulés en largeur d'impulsion et/ou modulés en amplitude pour distinguer les cellules de batterie (2) acquises.

12. Système comprenant un dispositif de régulation de température (3) et un dispositif d'acquisition de données (10) pour un système de batteries (1), le système de batteries (1) présentant au moins une cellule de batterie (2), le dispositif de régulation de température (3) présentant un fluide de régulation de température (6), qui est conduit au moins par sections dans une conduite de fluide de régulation de température (4), pour la régulation de température de la au moins une cellule de batterie (2), le dispositif d'acquisition de données (10) présentant un dispositif de capteur (11) pour déterminer des données d'état de l'au moins une cellule de batterie (2), un dispositif de contrôle (12) pour traiter les données d'état et un dispositif de transmission (20) pour transmettre les données d'état,
**caractérisé en ce que**
le dispositif de transmission (20) est conçu selon l'une des revendications précédentes 1 à 5 et/ou le dispositif d'acquisition de données (10) est conçu selon l'une des revendications précédentes 6 à 11.

13. Système selon la revendication 12,
**caractérisé en ce que,**
pour fournir une réflexion totale des signaux lumineux (60), le conduit de fluide de régulation de température (4) a une paroi interne (5) avec au moins deux indices de réfraction différents, et/ou **en ce que** le conduit de fluide de régulation de température (4) a une paroi interne (5), dans lequel la paroi interne (5) et le fluide de régulation de température (6) ont deux indices de réfraction différents.

14. Système selon la revendication 12 ou 14,
**caractérisé en ce que**
la conduite de fluide de régulation de température (4) est droite ou au moins sensiblement droite entre un premier emplacement d'agencement (33) de la première unité de communication (31) et un deuxième emplacement d'agencement (43) de la deuxième unité de communication (41).

15. Système de batteries (1), comprenant au moins une cellule de batterie (2) et un système d'un dispositif de régulation de température (3) et d'un dispositif d'acquisition de données (10) pour un système de batteries (1),
**caractérisé en ce que le**
système est conçu selon l'une des revendications 12 à 13.

16. Procédé de transmission de données d'état d'une cellule de batterie (2) dans un système de batteries (1) selon la revendication 13,
**caractérisé en ce**
**que** les données d'état sont transmises au moins en partie comme signaux lumineux (60) dans le fluide de régulation de température (6).
